# EUROPÄISCHE PATENTSCHRIFT

(11) **EP 4 091 888 B1**
(45) Veröffentlichungstag und Bekanntmachung des Hinweises auf die Patenterteilung: **27.12.2023**
(21) Anmeldenummer: 22155432.2
(22) Anmeldetag: 07.02.2022
(51) Int. Cl.: B60T 13/12

(54) **BREMSSYSTEM FÜR EINE LANDWIRTSCHAFTLICHE ARBEITSMASCHINE UND VERFAHREN ZU DESSEN BETRIEB**
BRAKING SYSTEM FOR AN AGRICULTURAL WORKING MACHINE AND METHOD FOR ITS OPERATION
SYSTÈME DE FREINAGE POUR UNE MACHINE DE TRAVAIL AGRICOLE ET SON PROCÉDÉ DE FONCTIONNEMENT

(30) Priorität: 21.05.2021 DE 102021113347
(43) Veröffentlichungstag der Anmeldung: 23.11.2022
(73) Patentinhaber: CLAAS Selbstfahrende Erntemaschinen GmbH, 33428 Harsewinkel (DE)
(72) Erfinder: Peters, Stefan, 48147 Münster (DE); Obeloer, Torsten, 33335 Gütersloh (DE)
(74) Vertreter: CLAAS Gruppe

(56) Entgegenhaltungen:
- EP-A2- 1 495 933
- EP-A2- 2 310 239
- GB-A- 1 495 915
- KR-A- 20200 077 015
- US-A- 3 601 232
- US-A- 3 917 037
- US-A1- 2021 122 348

## Beschreibung

Die vorliegende Erfindung betrifft ein Bremssystem für eine landwirtschaftliche Arbeitsmaschine gemäß dem Oberbegriff von Anspruch 1. Weiterhin betrifft die vorliegende Erfindung ein Verfahren zum Betrieb eines Bremssystems gemäß dem Oberbegriff von Anspruch 13.

Das Bremssystem umfasst ein Betätigungselement, das insbesondere von einem Bremspedal gebildet sein kann. Mit dem Betätigungselement steht vorzugsweise mindestens ein Geberzylinder in Wirkverbindung. Auf diese Weise kann eine Betätigung des Betätigungselements einen Einfluss auf einen Zustand des Geberzylinders nehmen. Insbesondere ist es denkbar, dass infolge einer Betätigung des Betätigungselements mindestens ein mechanisch mit dem Betätigungselement verbundener Kolben innerhalb eines Druckraums des Geberzylinders bewegt und dadurch ein hydraulischer Druck eines hydraulischen Fluids in einem hydraulischen Betätigungssystem verändert werden. Das Betätigungselement steht zumindest mittelbar in Wirkverbindung mit mindestens einem Bremssattel, der ebenfalls Teil des Bremssystems ist. Der Bremssattel kann insbesondere hydraulisch betätigbar ausgeführt sein, wobei der Bremssattel vorzugsweise zumindest teilweise als Nehmerzylinder in einem hydraulischen Betätigungssystem ausgebildet ist, dessen Teil auch mindestens ein Geberzylinder ist. Die Verbindung des Geberzylinders mit dem Bremssattel kann insbesondere mittels mindestens einer Hydraulikleitung gegeben sein, die eine strömungstechnische Verbindung schafft.

Das Bremssystem umfasst sowohl eine Funktion als Betriebsbremse als auch eine Funktion als Hilfsbremse, die redundant zur Betriebsbremse ausgebildet ist. Das Vorhandensein sowohl einer Betriebsbremse als auch einer hierzu redundanten Hilfsbremse ist sicherheitstechnisch vorgeschrieben. Das Betätigungselement ist zumindest in der Funktion des Bremssystems als Betriebsbremse dazu eingerichtet, den Bremssattel in einen Bremszustand zu überführen. Der Bremszustand ist dadurch gekennzeichnet, dass er eine Verzögerung der Arbeitsmaschine bzw. eine Bremsung derselben bewirkt. Insbesondere ist es denkbar, dass infolge einer zumindest mittelbaren hydraulischen Betätigung des Bremssattels mindestens ein Bremsbelag in reibenden Kontakt mit einer Bremsscheibe der Arbeitsmaschine bringbar ist.

Bremssysteme der vorstehend beschriebenen Art sind imstande Technik bereits bekannt. Hierzu wird beispielhaft auf die deutsche Offenlegungsschrift 10 2008 030 511 A1 hingewiesen. Diese beschreibt ein Bremssystem, das in drei Funktionen betrieben werden kann, nämlich als Betriebsbremse, als Feststellbremse und als Hilfsbremse. Die Betriebsbremse ist über ein erstes Betätigungselements betätigbar. Die Feststellbremse kann über ein weiteres Betätigungselement betätigt werden, wobei beide Betätigungselemente in einem Innenraum einer Kabine der jeweiligen Arbeitsmaschine angeordnet sind. Das Betätigungselement der Feststellbremse kann derart mit einer Ventileinrichtung zusammenwirken, dass eine Bremswirkung des Bremssystems dosierbar ist, sodass mittels des zweiten Betätigungselements neben der Funktion der Feststellbremse ferner die Funktion des Bremssystems als Hilfsbremse wahrgenommen werden kann. Das weitere Dokument des Standes der Technik GB 1 495 915 A beschreibt ein Bremssystem einer landwirtschaftlichen Maschine, das federgespannte Betriebsbremsen aufweist, so dass eine Bremswirkung, bei Druckabfall im Bremskreis, automatisch erzeugt wird.

Die bekannten Bremssysteme sind insoweit als nachteilig anzusehen, als sie verschiedene Betätigungselemente zur Wahrnehmung aller Funktionen des jeweiligen Bremssystems bedürfen. Dies ist sowohl im Hinblick auf erforderlichen Bauraum innerhalb der jeweiligen Kabine als auch betreffend erforderliche Durchdringungen von Raumbegrenzungselementen der Kabine zwecks Führung von hydraulischen und/oder elektrischen Leitungen des Bremssystems nachteilig, wobei insbesondere letzteres eine akustische Trennung des Innenraums der Kabine von einer Umgebung erschwert.

Mithin besteht die Aufgabe der vorliegenden Erfindung darin, ein Bremssystem bereitzustellen, das die vorstehenden Nachteile vermeidet.

Die zugrunde liegende Aufgabe wird erfindungsgemäß mit einem Bremssystem mit den Merkmalen des Anspruchs 1 gelöst. Vorteilhafte Ausgestaltungen ergeben sich aus den zugehörigen Unteransprüchen.

Das erfindungsgemäße Bremssystem ermöglicht, dass das Betätigungselement auch bei Vorliegen des Bremssystems in dessen Funktion als Hilfsbremse dazu eingerichtet ist, den Bremssattel in einen Bremszustand zu überführen. Mithin dient das Betätigungselement sowohl bei Betrieb des Bremssystems in seiner Funktion als Betriebsbremse als auch in seiner Funktion als Hilfsbremse zur Betätigung durch einen Nutzer der jeweiligen Arbeitsmaschine.

Das erfindungsgemäße Bremssystem hat viele Vorteile. Insbesondere ist für die Bedienung des Bremssystems unabhängig davon, ob dieses in seiner Funktion als Betriebsbremse oder in seiner Funktion als Hilfsbremse verwendet wird, ein einziges Betätigungselement ausreichend. Dies hat den Vorteil, dass innerhalb der Kabine der jeweiligen Arbeitsmaschine ein geringerer Bedarf an Bauraum besteht. Insbesondere sind keine separaten Bremspedale für die Betriebsbremse und für die Hilfsbremse nötig. Als weiterer Vorteil ergibt sich, dass es für eine Anbindung des Betätigungselements an das übrige Bremssystem lediglich erforderlich ist, eine einzige Durchdringung eines Raumbegrenzungselements der Kabine vorzusehen, da - wie vorstehend dargelegt - nur ein einziges Betätigungselement an das übrige Bremssystem angeschlossen werden muss. Hierdurch ergibt sich ein Vorteil in der akustischen Isolierung der Kabine gegen die Umgebung.

Vorteilhafterweise umfasst das Bremssystem einen Geberzylinder, der mit dem Betätigungselement in Wirkverbindung steht sowie hydraulisch mit mindestens einem Bremssattel verbunden ist. Mittels eines Geberzylinders ist der Bremssattel besonders einfach hydraulisch betätigbar.

Im erfindungsgemäßen Bremssystems ist eine Steuereinrichtung vorgesehen, die dazu eingerichtet ist, fortwährend einen Betrieb des Bremssystems zu überwachen. Insbesondere ist die Steuereinrichtung dazu geeignet, eine Unterfunktion des Bremssystems in dessen Funktion als Betriebsbremse zu erkennen und im Falle der Feststellung einer solchen Unterfunktion automatisch eine Umstellung auf die Funktion als Hilfsbremse zu erwirken. Auf diese Weise ist es möglich, ohne Zutun des Nutzers der Arbeitsmaschine auf die Funktion der Hilfsbremse umzuschalten, sodass zu jedem Zeitpunkt des Betriebs der Arbeitsmaschine eine Bremsung derselben zuverlässig erfolgen kann.

Sofern eine solche Steuereinrichtung vorliegt, kann es weiterhin von Vorteil sein, wenn das Bremssystem mindestens eine Sensoreinrichtung aufweist, die zur Erfassung von Betriebsdaten geeignet ist. Die Sensoreinrichtung ist in Daten übertragender Weise mit der Steuereinrichtung verbunden, sodass die erfassten Betriebsdaten an die Steuereinrichtung leitbar sind. Die Steuereinrichtung kann insbesondere von einem Winkelsensor gebildet sein, der mit dem Betätigungselement zusammenwirkt. Dies ist vor allem dann von Vorteil, wenn das Betätigungselement als Bremspedal ausgebildet ist. Weiterhin kann es von Vorteil sein, wenn mindestens eine Sensoreinrichtung von einem Drucksensor gebildet ist, der mit einem Druckraum des Geberzylinders zusammenwirkt. Der Drucksensor ist dazu geeignet, einen hydraulischen Druck eines in dem Druckraum befindlichen Fluids zu erfassen.

Die Ausgestaltung des Bremssystems mit mindestens einer, vorzugsweise mehreren Sensoreinrichtungen vereinfacht die Überwachung des Bremssystems mittels der Steuereinrichtung, da unter Verwendung mindestens einer Sensoreinrichtung der Steuereinrichtung die mittels der Sensoreinrichtung erfassten Betriebsdaten zur Verfügung gestellt werden können, die zur Überwachung des Betriebs des Bremssystems herangezogen werden können. Sofern beispielsweise das Bremssystem die vorstehend beispielhaft beschriebenen Sensoreinrichtungen in Form eines Winkelsensors und eines Drucksensors umfasst, ist es insbesondere möglich, eine Diskrepanz zwischen einer Winkelstellung der Betätigungseinrichtung und einem in dem Druckraum des Geberzylinders vorliegenden Druck eines jeweiligen hydraulischen Fluids festzustellen. Dies folgt der Überlegung, dass typischerweise eine unmittelbare Korrelation zwischen der Winkelstellung des Betätigungselements und dem Druck des in dem Druckraum befindlichen Fluids des Geberzylinders besteht, wobei einer Betätigung des Betätigungselements, insbesondere mittels eines Fußdrucks durch den Nutzer der Arbeitsmaschine auf das Betätigungselement, dessen Winkelstellung verändert, wobei hierdurch ein mechanisch mit dem Betätigungselement verbundener Kolben des Geberzylinders bewegt und dadurch der Druck des Fluids in dem Druckraum des Geberzylinders erhöht wird.

Sollte aufgrund der mittels der Sensoreinrichtungen erfassten Betriebsdaten die Steuereinrichtung nunmehr feststellen, dass die Veränderung der Winkelstellung des Betätigungselements nicht in erwartbarer Weise zu einer korrespondierenden Veränderung des Drucks des in dem Druckraum befindlichen Fluids des Geberzylinders führt, ergibt die Überwachung der Steuereinrichtung, dass eine Unterfunktion des Bremssystems in dessen Funktion als Betriebsbremse vorliegt. Der Begriff der "Unterfunktion" meint in diesem Fall eine Funktionsweise, die von einer zuvor definierten Funktionsweise abweicht. Hierbei sind insbesondere solche Fälle von Bedeutung, in denen trotz Betätigung des Betätigungselements durch den Nutzer der Arbeitsmaschine kein oder nur ein unterproportionaler Aufbau des Drucks des in dem Druckraum befindlichen Fluids des Geberzylinders stattfindet. Eine entsprechende hydraulische Überführung des Bremssattels in einen Bremszustand kann in einer solchen Situation nicht sichergestellt werden, sodass mittels der Steuereinrichtung automatisch das Bremssystem auf dessen Funktion der redundanten Hilfsbremse erwirkt werden soll bzw. erwirkt wird.

In einer vorteilhaften Ausgestaltung des erfindungsgemäßen Bremssystems umfasst der Bremssattel einen Betriebskolben und einen mit dem Betriebskolben zusammenwirkenden hydraulischen Betriebsraum. Der Betriebsraum ist derart eingerichtet, dass ein darin befindliches Fluids zumindest im Betrieb des Bremssystems in dessen Funktion als Betriebsbremse bei Betätigung des Betätigungselements über den Geberzylinder mit einem hydraulischen Druck beaufschlagbar ist und auf diese Weise der Bremssattel in einen Bremszustand überführbar ist. Hierzu ist es insbesondere denkbar, dass der Geberzylinder mittels mindestens einer Hydraulikleitung strömungstechnisch mit dem Betriebsraum des Bremssattels verbunden ist, sodass eine mittels Betätigung des Betätigungselements herbeigeführte Druckänderung betreffend das in dem Druckraum des Geberzylinders befindliche Fluid zu einer zumindest im Wesentlichen betragsmäßig gleichen Beaufschlagung des Betriebsraums mit hydraulischen Druck führt. Bedingt durch diese Druckänderung ergibt sich eine resultierende Kraft an dem Betriebskolben, der eine Wirkfläche aufweist, die mit dem in dem Betriebsraum befindlichen hydraulischen Fluid in Kontakt steht. Insbesondere kann es vorgesehen sein, dass der Betriebskolben in einem Freizustand des Bremssattels, in dem der Bremssattel keine Bremsung der Arbeitsmaschine bewirkt, mittels einer Feder, die insbesondere als Rückzugsfeder ausgebildet sein kann, in einer Inaktivstellung gehalten ist, wobei im Zuge der Beaufschlagung des in dem Betriebsraum befindlichen Fluids mit hydraulischen Druck der Betriebskolben entgegen einer Federkraft der Feder ausgehend von der Inaktivstellung in eine Aktivstellung überführbar ist. Dies ist gleichbedeutend mit einer Überführung des Bremssattels in einen Bremszustand, da insbesondere infolge der Bewegung des Betriebskolbens mindestens ein Bremsbelag in reibenden Kontakt mit einer korrespondierenden Bremsscheibe gebracht werden kann.

Weiterhin kann eine solche Ausgestaltung des Bremssystems von Vorteil sein, bei der der Bremssattel eine Hilfskolben, eine vorgespannte Feder sowie einen hydraulischen Hilfsraum umfasst. Der Hilfskolben ist mittels der Feder mit einer Federkraft beaufschlagt, die eine Überführung des Hilfskolbens von einer Inaktivstellung in eine Aktivstellung und mithin des Bremssattels von einem Freizustand in einen Bremszustand anstrebt. An dem Hilfskolben ist hierzu eine Wirkfläche ausgebildet, die mit einem hydraulischen Fluid, das sich in dem Hilfsraum befindet, in Kontakt steht. Mit anderen Worten ist die Wirkfläche des Hilfskolbens derart ausgebildet, dass eine hydraulische Druckkraft, die sich als Resultierende infolge eines an der Wirkfläche anliegenden Drucks eines innerhalb des Hilfsraums befindlichen Fluids einstellt, entgegen der Federkraft der Feder wirkt.

Bei einer solchen Ausgestaltung ist es insbesondere denkbar, dass das in dem Hilfsraum befindliche Fluid in einem Betrieb des Bremssystems in seiner Funktion als Betriebsbremse unter einem zumindest im Wesentlichen konstanten Druck steht. Dieser ist bevorzugt derart ausgebildet, dass die an der Wirkfläche des Hilfskolbens wirkende Resultierende betragsmäßig zumindest der Federkraft der mit dem Hilfskolben zusammenwirkenden vorgespannten Feder entspricht, vorzugsweise diese übersteigt. Dies hat zur Folge, dass der Hilfskolben in seiner Inaktivstellung verbleibt, in der er keine Bremswirkung des Bremssattels verursacht. Eine gewünschte Bremswirkung wird in diesem Zustand vorteilhafterweise über einen Betriebskolben des Bremssattels in dessen Zusammenwirkung mit einem Betriebsraum in der vorstehend beschriebenen Weise realisiert.

Für den Fall allerdings, dass das Bremssystem in seiner Funktion als Hilfsbremse betrieben wird, ist es besonders vorteilhaft, wenn der hydraulische Druck des in dem Hilfsraum befindlichen Fluids gesenkt wird, gegebenenfalls bis auf null, sodass die Resultierende an der Wirkfläche des Hilfsraums betragsmäßig unterhalb die Federkraft der vorgespannten Feder fällt. Dies führt zu einer Bewegung des Hilfskolbens in eine Aktivstellung, die wiederum gemäß vorstehender Erläuterung eine Überführung des Bremssattels in einen Bremszustand bewirkt.

Sofern der Bremssattel den vorstehend beschriebenen Hilfskolben umfasst, kann es besonders von Vorteil sein, wenn das Bremssystem ferner mindestens ein Proportionalventil umfasst, das hydraulisch mit dem Hilfsraum zusammenwirkt. Das Proportionalventil ist vorteilhafterweise derart ausgebildet, dass der hydraulische Druck innerhalb des Hilfsraums mittels des Proportionalventils veränderbar ist, vorzugsweise in einer stufenlosen Art und Weise. Vorteilhafterweise kann der hydraulische Druck innerhalb des Hilfsraums bis auf null absenkbar sein. Die Verwendung eines Proportionalventils ermöglicht es, eine Differenzkraft zwischen der Federkraft der vorgespannten Feder und der Resultierenden an der Wirkfläche des Hilfskolbens einzustellen, womit effektiv eine Bremskraft des Bremssattels einstellbar ist. Die beschriebene Ausgestaltung ist besonders vorteilhaft für den Betrieb des Bremssystems in seiner Funktion als Hilfsbremse verwendbar, da eine dosierte Einstellung der effektiv mittels des jeweiligen Bremssattels bewirkten Bremskraft unabhängig von einer technischen Funktion eines Betriebskolbens im Zuge des Betriebs des Bremssystems in seiner Funktion als Betriebsbremse möglich ist. Auf diese Weise ist die Funktion des Bremssystems als Hilfsbremse redundant zu der Funktion des Bremssystems als Betriebsbremse ausgebildet.

In einer weiterhin besonders vorteilhaften Ausgestaltung des Bremssystems umfasst dieses sowohl eine vorstehend beschriebene Steuereinrichtung als auch ein vorstehend beschriebenes Proportionalventil, wobei zumindest im Betrieb des Bremssystems in dessen Funktion als Hilfsbremse das Proportionalventil mittels der Steuereinrichtung ansteuerbar ist. Diese Ausgestaltung hat den besonderen Vorteil, dass die Steuereinrichtung besonders einfach bei Feststellung einer Unterfunktion des Bremssystems in dessen Funktion als Betriebsbremse über das Proportionalventil auf die Funktion des Bremssystems als Hilfsbremse "umschalten" kann, indem mittels Veränderung einer Stellung des Proportionalventils der hydraulische Druck des in dem Hilfsraum befindlichen Fluids geändert und hierdurch in der vorstehend beschriebenen Weise der Hilfskolben in eine Aktivstellung überführt werden.

Das erfindungsgemäße Bremssystem weiter ausgestaltend umfasst selbiges eine Funktion als Feststellbremse, wobei das Bremssystem ein Feststellelement umfasst. Letzteres kann insbesondere in Form eines Druckknopfs oder eines Schwenkhebels ausgeführt sein, wobei mittels des Feststellelements die Funktion des Bremssystems als Feststellbremse wechselweise aktivierbar und deaktivierbar ist. Das Feststellelement kann insbesondere in einem Innenraum einer Kabine einer jeweiligen Arbeitsmaschine angeordnet sein.

Sofern die Funktion als Feststellbremse umfasst ist und das Bremssystem ferner eine Steuereinrichtung umfasst, kann es besonders von Vorteil sein, wenn das Feststellelement mit der Steuereinrichtung zusammenwirkt. Dies kann derart erfolgen, dass bei einer Aktivierung der Funktion des Bremssystems als Feststellbremse der Bremssattel in einen Bremszustand überführbar und zumindest bis zu einer Deaktivierung der Funktion als Feststellbremse in dem Bremszustand haltbar ist. Vorteilhafterweise ist der Bremszustand bei Vorliegen des Bremssystems in dessen Funktion als Feststellbremse derart ausgebildet, dass der Bremssattel eine maximal mögliche Bremskraft erwirkt. Die Überführung des Bremssattels in einen Bremszustand erfolgt zumindest mittelbar vorzugsweise mittels der Steuereinrichtung, wobei insbesondere in der vorstehend beschriebenen Art die Zusammenwirkung mit einem Proportionalventil denkbar ist. Insbesondere ist es denkbar, dass das Proportionalventil derart einstellbar ist bzw. eingestellt wird, dass der hydraulische Druck des in dem Hilfsraum befindlichen Fluids auf null abgesenkt wird, wodurch die auf den Hilfskolben wirkende Differenzkraft zwischen der (verschwindenden) Resultierenden infolge des Drucks im Hilfsraum und der Federkraft der vorgespannten Feder betragsmäßig maximal ist. Der Hilfskolben ist auf diese Weise in der Lage, eine maximale Bremskraft des Bremssattels zu erwirken.

Die zugrunde liegende Aufgabe wird ferner verfahrensmäßig mit einem Verfahren mit den Merkmalen des Anspruchs 13 gelöst. Vorteilhafte Ausgestaltungen ergeben sich aus den zugehörigen Unteransprüchen.

Das erfindungsgemäße Verfahren ist dadurch gekennzeichnet, dass das Bremssystem sowohl in seiner Funktion als Betriebsbremse als auch in seiner Funktion als Hilfsbremse mittels desselben Betätigungselements betätigt wird. Das Betätigungselement kann insbesondere von einem Bremspedal gebildet sein, das in einer Kabine einer jeweiligen landwirtschaftlichen Arbeitsmaschine angeordnet ist. Die Vorteile, die sich durch die Verwendung lediglich eines Betätigungselements für die Funktionen "Betriebsbremse" und "Hilfsbremse" des Bremssystems ergeben, sind vorstehend bereits im Zusammenhang mit dem erfindungsgemäßen Bremssystem beschrieben.

Das erfindungsgemäße Verfahren ist dann besonders von Vorteil, wenn mittels mindestens einer Sensoreinrichtung Betriebsdaten betreffend das Betätigungselement und mittels einer weiteren Sensoreinrichtung Betriebsdaten betreffend einen Geberzylinder erfasst werden. Diese Betriebsdaten werden jeweils an eine Steuereinrichtung geleitet, mittels der die Betriebsdaten ausgewertet werden. Auf diese Weise kann festgestellt werden, ob das Bremssystem in seiner Funktion als Betriebsbremse ordnungsgemäß arbeitet oder ob gegebenenfalls eine Unterfunktion vorliegt. Sofern letzteres der Fall ist, ist es möglich, dass die Funktion des Bremssystems von der Funktion "Betriebsbremse" automatisch mittels der Steuereinrichtung auf die Funktion "Hilfsbremse" umgeschaltet wird.

Das erfindungsgemäße Verfahren weiter ausgestaltend steuert die Steuereinrichtung bei Betrieb des Bremssystems in dessen Funktion als Hilfsbremse ein Proportionalventil an, mittels dessen ein hydraulischer Druck eines in einem Hilfsraum befindlichen Fluids des Bremssattels verändert wird. Diese Veränderung kann vorzugsweise stufenlos erfolgen. Hierdurch ist gemäß vorstehender Beschreibung eine Bewegung eines Hilfskolbens steuerbar, der ausgehend von einer Inaktivstellung in eine Aktivstellung überführt werden kann, wodurch wiederum der Bremssattel von einem Freizustand in einen Bremszustand überführt wird. Dies ist dann der Fall, wenn eine Resultierende, die auf eine Wirkfläche des Hilfskolbens infolge des hydraulischen Drucks des Fluids innerhalb des Hilfsraums wirkt, betragsmäßig eine Federkraft einer auf den Hilfskolben einwirkenden vorgespannten Feder derart unterschreitet, dass die Federkraft dominierend für die Stellung des Hilfskolbens wird. Umso größer eine solche Differenzkraft zwischen der Federkraft und der Resultierenden ist, desto stärker ist eine mittels des Bremssattels erwirkte Bremskraft.

Insbesondere ist eine solche Ausgestaltung des Verfahrens von Vorteil, bei der in dem Betrieb des Bremssystems in dessen Funktion als Hilfsbremse die mittels einer an dem Betätigungselement angeordneten Sensoreinrichtung erfassten Betriebsdaten mittels der Steuereinrichtung ausgewertet werden, wobei die Steuereinrichtung in Abhängigkeit von einer Stellung des Betätigungselements, die sich aus den Betriebsdaten ergibt, das Proportionalventil ansteuert und auf diese Weise in Proportion zur Stellung des Betätigungselements den Druck des in dem Hilfsraum des Bremssattels befindlichen hydraulischen Fluids einstellt. In Abhängigkeit von dem genannten Druck ergibt sich in der beschriebenen Weise die Differenzkraft zwischen der Resultierenden und der Federkraft und daraus wiederum die effektive Bremskraft, die mittels des Bremssattels bewirkt wird. Auf diese Weise ist eine Beziehung zwischen dem Betätigungselement und der effektiv bewirkten Bremskraft geschaffen, die das Bremssystem in dessen Funktion als Hilfsbremse verlangt. Diese Betriebsweise des Bremssystems ist unabhängig von der Betriebsweise in der Funktion als Betriebsbremse und stellt mithin eine Redundanz zu der Betriebsbremse dar.

In einer weiterhin vorteilhaften Ausgestaltung, in der das Bremssystem eine Funktion als Feststellbremse aufweist, wird bei einem entsprechenden Betrieb des Bremssystems das Proportionalventil mittels der Steuereinrichtung derart angesteuert, dass der hydraulische Druck des in dem Hilfsraum befindlichen Fluids auf null abgesenkt wird. Die vorstehend beschriebene Differenzkraft ist in diesem Zustand maximal, da sie vollständig von der Federkraft der vorgespannten Feder gebildet ist. Entsprechend ist die mittels des Bremssattels bewirkte Bremskraft ebenfalls maximal, was für die Funktion des Bremssystems als Feststellbremse besonders von Vorteil ist.

Die Erfindung ist nachstehend anhand eines Ausführungsbeispiels, das in den Figuren dargestellt ist, näher erläutert. Es zeigt:
- Fig. 1:: Einen Querschnitt durch eine landwirtschaftliche Arbeitsmaschine, die mit einem erfindungsgemäßen Bremssystem ausgestattet ist,
- Fig. 2:: Ein Schaltbild eines erfindungsgemäßen Bremssystems und
- Fig. 3:: Ein Querschnitt durch einen Bremssattel des Bremssystems gemäß Figur 2.

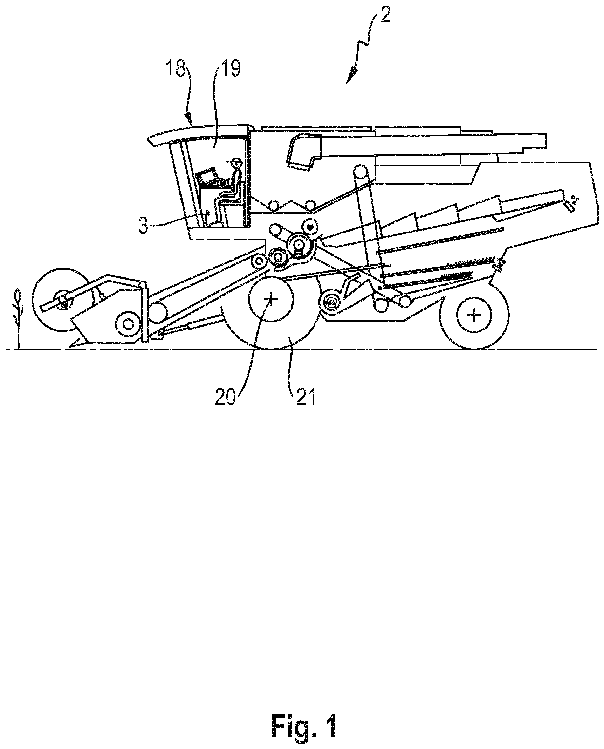

Ein Ausführungsbeispiel, das in den **Figuren 1 bis 3** gezeigt ist, umfasst ein erfindungsgemäßes Bremssystem **1**, das ein einer Arbeitsmaschine **2** ausgebildet ist. Die Arbeitsmaschine **2** ist hier von einem Mähdrescher gebildet, an dessen Frontseite eine Kabine **18** angeordnet ist. Die Kabine **18** ist von einer Mehrzahl von Raumbegrenzungselementen eingefasst, sodass ein Innenraum **19** der Kabine **18** von einer Umgebung der Kabine **18** räumlich abgetrennt ist. Innerhalb der Kabine **18** ist ein Betätigungselement **3** in Form eines Bremspedals angeordnet, das Teil des erfindungsgemäßen Bremssystems **1** ist.

Das Betätigungselement **3** ist in dem gezeigten Beispiel mechanisch mit einem Geberzylinder **4** verbunden, der ebenfalls innerhalb der Kabine **18** angeordnet ist. Der Geberzylinder **4** umfasst einen Druckraum **9**, in dem sich ein hydraulisches Fluid befindet. In Abhängigkeit einer Winkelstellung des Betätigungselements **3** ist das in dem Druckraum **9** befindliche Fluid veränderlich unter Druck setzbar. Hierbei ist in dem Ausführungsbeispiel vorgesehen, dass eine ausgehend von einer Nullstellung umso stärkere Auslenkung des Betätigungselements **3** einen umso stärkeren Anstieg des Drucks des Fluids in dem Druckraum **9** bewirkt. Hierzu verfügt der Geberzylinder **4** über entsprechende Kolben, die in Abhängigkeit der Winkelstellung des Betätigungselements **3** in dem Druckraum **9** bewegt werden.

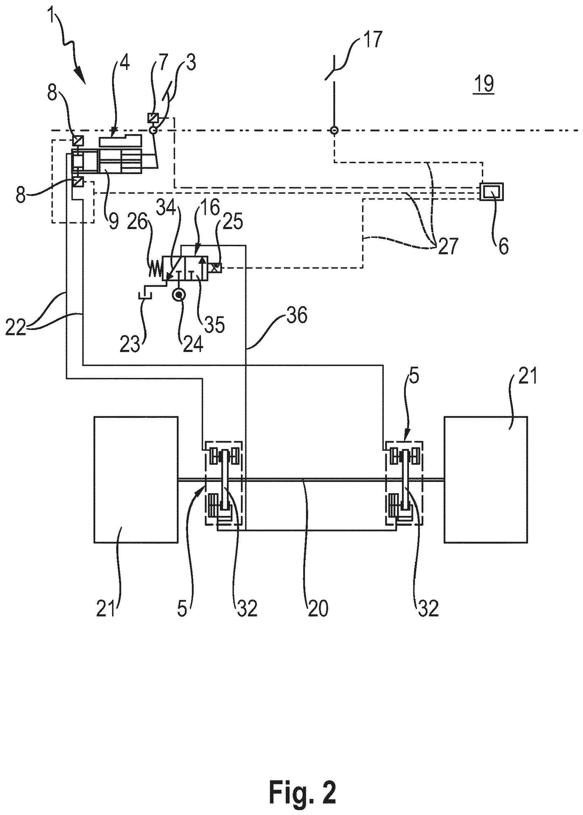

Wie sich besonders gut anhand von **Figur 2** ergibt, ist der Geberzylinder **4** mittels Hydraulikleitungen **22** mit insgesamt zwei Bremssätteln **5** verbunden, die jeweils mit mindestens einer Bremsscheibe **32** zusammenwirken. Letztere wirken wiederum mit einer Vorderachse **20** der Arbeitsmaschine **2** zusammen, an der Reifen **21** angeordnet sind.

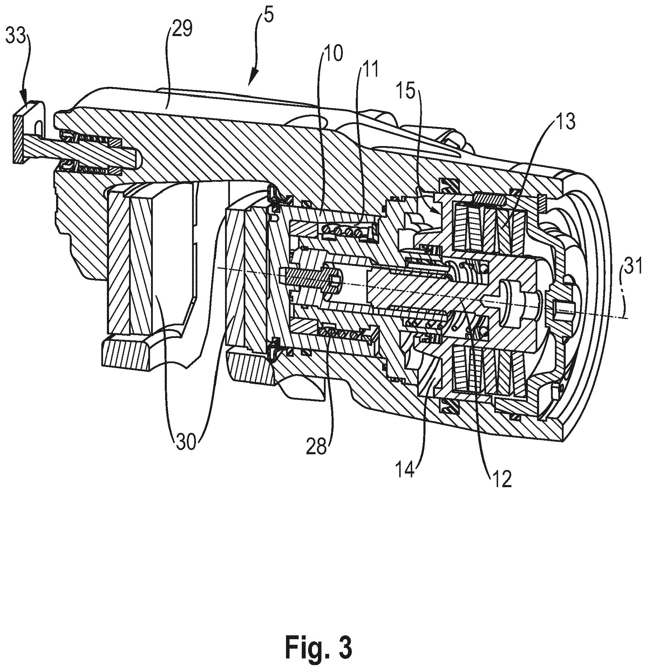

Der Aufbau eines jeweiligen Bremssattels **5** ergibt sich besonders gut anhand von **Figur 3****.** Der Bremssattel **5** umfasst ein Gehäuse **29** innerhalb dessen ein Betriebskolben **10** axial entlang einer Wirkungsachse **31** beweglich angeordnet ist. Hierzu steht der Betriebskolben **10** in Wirkverbindung mit einem Betriebsraum **11**, in dem sich ein hydraulisches Fluid befindet und der mittels der Hydraulikleitungen **22** in strömungstechnischer Verbindung mit dem Druckraum **9** des Geberzylinders **4** steht. Ferner ist in dem Betriebsraum **11** eine Rückzugsfeder **28** angeordnet, die in Kraft übertragender Weise mit dem Betriebskolben **10** zusammenwirkt. Zur Überführung des Bremssystems **1** in einen Bremszustand bei Vorliegen des Bremssystems **1** in dessen Funktion als Betriebsbremse wird über eine Betätigung des Betätigungselements **3** der Druck des hydraulischen Fluids in dem Druckraum **9** des Geberzylinders **4** erhöht, wodurch analog infolge der strömungstechnischen Verbindung des Betriebsraums **11** über die Hydraulikleitungen **22** mit dem Druckraum **9** in dem Betriebsraum **11** ebenfalls eine Druckerhöhung stattfindet. Dies hat zur Folge, dass der Betriebskolben **10** ausgehend von einer Inaktivstellung in Richtung der Wirkungsachse **31** sowie entgegen einer Federkraft der Rückzugsfeder **28** nach vorne in eine Aktivstellung gedrückt wird, wodurch ein Bremsbelag **30** des Bremssattels **5** in Eingriff mit einer Bremsscheibe **32** gebracht wird, die in **Figur 3** nicht dargestellt ist. Mit Hilfe einer Zentriereinrichtung **33** ist zudem sichergestellt, dass ferner ein gegenüberliegender Bremsbelag **30** gleichermaßen in Eingriff mit der Bremsscheibe **32** gebracht wird. Der Kontakt zwischen den Bremsbelägen **30** und der Bremsscheibe **32** führt zu einer kraftschlüssigen Verbindung, die die gewünschte Bremswirkung erzeugt. Mithin befindet sich der Bremssattel **5** in einem Bremszustand.

Sobald das Betätigungselement **3** gelöst wird, sinkt der Druck in dem Druckraum **9** und entsprechend in dem Betriebsraum **11**, sodass die Federkraft der Rückzugsfeder **28** dominierend wird und den Betriebskolben **10** zurück in seine Inaktivstellung zieht. Der reibende Eingriff zwischen den Bremsbelägen **30** und der Bremsscheibe **32** wird im Zuge dessen aufgelöst, sodass sich der Bremssattel **5** wieder in einem Freizustand befindet, in dem er keine Bremswirkung erzeugt. Die beschriebene Funktionsweise veranschaulicht den Betrieb des Bremssystems **1** in dessen Funktion als Betriebsbremse.

Aus sicherheitstechnischen Gründen ist es erforderlich, dass das Bremssystem **1** über eine redundante Hilfsbremse verfügt. In dem vorliegenden Beispiel ist dies erfindungsgemäß wie folgt umgesetzt: Das Bremssystem **1** verfügt über zwei Sensoreinrichtungen **7**, **8** sowie eine Steuereinrichtung **6**. Eine erste Sensoreinrichtung **7** wirkt mit dem Betätigungselement **3** zusammen und ist als Winkelsensor ausgeführt. Hierdurch ist die Sensoreinrichtung **7** dazu geeignet, eine Winkelstellung des Betätigungselements **3**, das gemäß vorstehender Beschreibung hier als Bremspedal ausgeführt ist, zu erfassen. Die zweite Sensoreinrichtung **8** ist als Drucksensor ausgebildet und steht in Wirkverbindung mit dem Druckraum **9** des Geberzylinders **4**. Beide Sensoreinrichtungen **7**, **8** sind mittels Datenleitungen **27** mit der Sensoreinrichtung **6** verbunden, sodass Betriebsdaten, die mittels der Sensoreinrichtungen **7**, **8** während eines Betriebs der Arbeitsmaschine **2** erfasst werden, an die Sensoreinrichtung **6** leitbar sind und geleitet werden.

Die Steuereinrichtung **6** ist dazu eingerichtet, die mittels der Sensoreinrichtungen **7**, **8** erfassten Betriebsdaten dahingehend auszuwerten, dass eine gegebenenfalls vorliegende Unterfunktion des Bremssystems **1** bei Vorliegen in dessen Funktion als Betriebsbremse festgestellt werden kann. Insbesondere ist es denkbar, dass eine mittels der Sensoreinrichtung **7** erfasste Winkelstellung des Betätigungselements **3** nicht den erwarteten proportionalen Anstieg des hydraulischen Drucks des in dem Druckraum **9** befindlichen Fluids auslöst. Dies ergibt sich anhand der mittels der Sensoreinrichtung **8** erfassten Betriebsdaten. Als Ursache ist beispielsweise ein mechanischer Defekt in der Verbindung des Betätigungselements **3** und dem Geberzylinder **4** denkbar. In jedem Fall ist nicht länger sichergestellt, dass die Betätigung des Betätigungselements **3** bei Vorliegen des Bremssystems in dessen Funktion als Betriebsbremse zuverlässig eine Überführung des Bremssattels **5** in einen Bremszustand bewerkstelligen kann. Entsprechend ist die Steuereinrichtung **6** dazu eingerichtet, bei Feststellung einer solchen Unterfunktion automatisch die Funktion des Bremssystems **1** auf dessen Funktion als Hilfsbremse umzuschalten.

Zur Wahrnehmung der Funktion als Hilfsbremse umfasst das Bremssystem **1** in dem gezeigten Beispiel ein Proportionalventil **16**. Dieses umfasst eine Stellfeder **26** sowie einen Aktuator **25**, der mittels einer Datenleitung **27** mit der Steuereinrichtung **6** verbunden ist. Auf diese Weise ist es Proportionalventil **16** mittels der Steuereinrichtung **6** ansteuerbar. Der Aktuator **25** ist dazu geeignet, das Proportionalventil **16** entgegen einer Federkraft der Stellfeder **26** ausgehend von einer ersten Stellung **34** in Richtung einer zweiten Stellung **35** zu überführen.

Das Proportionalventil **16** ist mittels einer Hydraulikleitung **36** mit den beiden Bremssätteln **5** in strömungstechnischer Weise verbunden. Insbesondere wirkt das Proportionalventil **16** mit einem Hilfsraum **14** eines jeweiligen Bremssattels **5** zusammen. Der Hilfsraum **14** steht wiederum in Wirkverbindung mit einem Hilfskolben **12** des zugehörigen Bremssattels **5**. Zur Überführung des Hilfskolbens **14** von einer Inaktivstellung in eine Aktivstellung sowie eine damit einhergehende Überführung des jeweiligen Bremssattels **5** von einem Freizustand in einen Bremszustand umfasst der Bremssattel **5** ferner eine vorgespannte Feder **13**, die hier in Form einer Tellerfeder ausgebildet ist. Die Feder **13** ist mit ihrer Federkraft bestrebt, den Hilfskolben **12** entlang der Wirkungsachse **31** nach vorne in seine Aktivstellung zu bewegen und dadurch die Bremsbeläge **30** in reibenden Eingriff mit der jeweiligen Bremsscheibe **32** zu bringen. Hierzu besteht eine unmittelbare Verbindung zwischen dem Hilfskolben **12** und dem Betriebskolben **10**, wobei letzterer bei Vorliegen des Bremssystems **1** in dessen Funktion als Hilfsbremse von dem Hilfskolben **12** gezwungen geführt wird.

Der Hilfsraum **14** ist derart relativ zu dem Hilfskolben **12** angeordnet, dass eine Wirkfläche **15** des Hilfskolbens **12**, an der ein in dem Hilfsraum **14** befindliches hydraulisches Fluid ansteht, an einer der Feder **13** gegenüberliegenden Seite angeordnet ist. Dies hat zur Folge, dass sich an der Wirkfläche **15** eine Resultierende ausbildet, sofern das in dem Hilfsraum **14** befindliche Fluid unter einem hydraulischen Druck steht. Die Resultierende ergibt sich hierbei zu dem Produkt aus dem Druck des Fluids und der Wirkfläche **15**.

Bei Vorliegen des Bremssystems **1** in dessen Funktion als Betriebsbremse steht das in dem Hilfsraum **14** befindliche Fluid vorzugsweise unter einem konstanten, vorgegebenen hydraulischen Druck, der derart bemessen ist, dass die Resultierende die Federkraft der Feder **13** übersteigt. Der Hilfskolben **12** ist mithin in einer Inaktivstellung gehalten, sodass für den Betrieb des Bremssattels **5** lediglich der Betriebskolben **10** in dessen Zusammenwirkung mit dem Betriebsraum **11** und der Rückzugsfeder **28** maßgeblich ist. Bei Wahrnehmung der Funktion als Hilfsbremse kann der hydraulische Druck des in dem Hilfsraum **14** befindlichen Fluids gesenkt werden, sodass die Federkraft der Feder **13** dominierend wird und dazu geeignet ist, den Hilfskolben **12** entgegen einem etwaigen verbleibenden Druck des in dem Hilfsraum **14** befindlichen Fluids sowie entgegen der Federkraft der Rückzugsfeder **28** in eine Aktivstellung und mithin den Bremssattel **5** in einen Bremszustand zu überführen.

Um eine solche Absenkung des hydraulischen Drucks in dem Hilfsraum **14** zu bewirken, kommt in dem gezeigten Beispiel das vorstehend beschriebene Proportionalventil **16** zum Einsatz. Wie dargelegt, ist dieses mittels der Hydraulikleitung **36** mit dem Bremssattel **5**, nämlich dem Hilfsraum **14**, strömungstechnisch verbunden. Sofern das Proportionalventil **16** in seiner ersten Stellung **34** vorliegt, ist der Hilfsraum **14** über die Hydraulikleitung **36** auf einen Tank **23** geschaltet und mithin drucklos. Gemäß vorstehender Erläuterung dominiert in diesem Zustand die Federkraft der Feder **13**, sodass der Hilfskolben **12** nach vorne geschoben und mithin in seiner Aktivstellung sowie der Bremssattel **5** in einem Bremszustand vorliegen. Da das Fluid in diesem Zustand vollständig drucklos ist, wird der Hilfsraum **14** maximal überdrückt, sodass sein Volumen minimal ist. Der Hilfskolben **12** ist entsprechend maximal ausgefahren, was dazu führt, dass eine mittels des Bremssattels **5** bewirkte Bremskraft maximal ist.

Bei Veränderung der Stellung des Proportionalventils **16** in Richtung von dessen zweiter Stellung **35** wird der Hilfsraum **14** über die Hydraulikleitung **36** mit einer Druckquelle **24** verbunden. Diese stellt hier einen konstanten hydraulischen Druck bereit. Das Proportionalventil **16** hat dabei die Funktion, über die Veränderung seiner Stellung zu regeln, welcher Anteil des mittels der Druckquelle **24** bereitgestellten hydraulischen Drucks in dem Hilfsraum **14** wirken soll. Hierbei ist die Stellung des Proportionalventils **16** vorzugsweise stufenlos einstellbar, sodass der hydraulische Druck des in dem Hilfsraum **14** befindlichen Fluids gleichermaßen stufenlos einstellbar ist. Eine Veränderung der Stellung des Proportionalventils **16** erfolgt hierbei über dessen Aktuator **25**, der mit der Steuereinrichtung **6** verbunden ist. Mithin ist im Ergebnis das Proportionalventil **16** dazu geeignet, den Druck des hydraulischen Fluids und mithin den in dem Hilfsraum **14** herrschenden hydraulischen Druck einzustellen. Hierdurch ist eine Differenzkraft zwischen der Federkraft der Feder **13** und der Resultierenden, die sich infolge des an der Wirkfläche **15** anliegenden hydraulischen Drucks ergibt, einstellbar, vorzugsweise in stufenloser Weise. Hieraus ergibt sich, dass gleichermaßen die Kraft, mit der der Hilfskolben **12** nach vorne geschoben wird, einstellbar ist. Dies ist wiederum gleichbedeutend damit, dass die mittels des Bremssattels **5** bewirkte Bremskraft einstellbar ist. Mithin ist bei Betrieb des Bremssystems **1** in seiner Funktion als Hilfsbremse die wirkende Bremskraft in Abhängigkeit einer Eingabe des Nutzers der Arbeitsmaschine einstellbar.

Der besondere Vorteil ist dabei darin zu sehen, das ist zur Verwendung des Bremssystems **1** in der Funktion als Hilfsbremse keines separaten Betätigungselements in dem Innenraum **19** der Kabine **18** der Arbeitsmaschine **2** bedarf. Stattdessen ist es erfindungsgemäß vorgesehen, dass das Betätigungselement **3** ebenfalls für den Betrieb des Bremssystems **1** in dessen Funktion als Hilfsbremse verwendet wird. Hierzu werden die mittels der ersten Sensoreinrichtung **7** erfassten Betriebsdaten weiterhin an die Steuereinrichtung **6** geleitet und dort verarbeitet. Infolge der Verarbeitung ist die Steuereinrichtung **6** dazu geeignet, entsprechende Steuerbefehle an den Aktuator **25** zu leiten, der proportional zu der erfassten Winkelstellung des Betätigungselements **3** die Stellung des Proportionalventils **16** verändert. Hierdurch stehen die Winkelstellung des Betätigungselements **3** und der herrschende hydraulische Druck in dem Hilfsraum **14** in einem proportionalen Zusammenhang, wodurch im Ergebnis die mittels des jeweiligen Bremssattels **5** bewirkte Bremskraft einstellbar ist.

Schließlich ist das Bremssystem **1** ferner in einer Funktion als Feststellbremse verwendbar. Die Feststellbremse dient dazu, die Arbeitsmaschine **2** dauerhaft, vorzugsweise mit maximaler Bremskraft, "festzustellen", sodass eine unbeabsichtigte Bewegung der Arbeitsmaschine **2** unterbunden ist. Die Feststellbremse soll so lange wirken, bis sie aktiv gelöst wird.

In dem vorliegenden Beispiel wird die Funktion des Bremssystems **1** als Feststellbremse dadurch umgesetzt, dass der hydraulische Druck des in dem Hilfsraum **14** befindlichen Fluids auf null abgesenkt wird. Hierzu wird der Aktuator **25** des Proportionalventils **16** deaktiviert, sodass die Stellfeder **26** die Stellung des Proportionalventils **16** dominiert und mithin in dessen erste Stellung **34** überführt. Wie vorstehend dargelegt, verbindet das Proportionalventil **26** bei Vorliegen in dieser ersten Stellung **34** den Hilfsraum **14** über die Hydraulikleitung **36** mit dem Tank **23**.

Um die Funktion als Feststellbremse des Bremssystems **1** zu aktivieren, umfasst letzteres in dem gezeigten Beispiel ein Feststellelement **17**, das beispielsweise in Form eines in dem Innenraum **19** der Kabine **18** angeordneten Druckknopfs ausgeführt sein kann. Mittels des Feststellelements **17** kann die Funktion des Bremssystems **1** als Feststellbremse wechselweise aktiviert und deaktiviert werden. Hierzu ist das Feststellelement **17** mittels einer Datenleitung **27** mit der Steuereinrichtung **6** verbunden, die bei Aktivierung des Feststellelements und mithin Überführung des Bremssystems **1** in dessen Funktion als Feststellbremse den Aktuator **25** ansteuert und deaktiviert.

### Bezugszeichenliste

- 1: Bremssystem
- 2: Arbeitsmaschine
- 3: Betätigungselement
- 4: Geberzylinder
- 5: Bremssattel
- 6: Steuereinrichtung
- 7: Sensoreinrichtung
- 8: Sensoreinrichtung
- 9: Druckraum
- 10: Betriebskolben
- 11: Betriebsraum
- 12: Hilfskolben
- 13: Feder
- 14: Hilfsraum
- 15: Wirkfläche
- 16: Proportionalventil
- 17: Feststellelement
- 18: Kabine
- 19: Innenraum
- 20: Achse
- 21: Reifen
- 22: Hydraulikleitung
- 23: Tank
- 24: Druckquelle
- 25: Aktuator
- 26: Stellfeder
- 27: Datenleitung
- 28: Rückzugsfeder
- 29: Gehäuse
- 30: Bremsbelag
- 31: Wirkungsachse
- 32: Bremsscheibe
- 33: Zentriereinrichtung
- 34: Erste Stellung
- 35: Zweite Stellung
- 36: Hydraulikleitung

## Patentansprüche

1. Bremssystem (1) für eine landwirtschaftliche Arbeitsmaschine (2), umfassend
- ein Betätigungselement (3), sowie
- mindestens einen Bremssattel (5),
wobei das Bremssystem (1) eine Funktion als Betriebsbremse sowie eine Funktion als zur Betriebsbremse redundante Hilfsbremse umfasst,
wobei das Betätigungselement (3) zumindest in der Funktion des Bremssystems (1) als Betriebsbremse dazu eingerichtet ist, den Bremssattel (5) in einen Bremszustand zu überführen und auf diese Weise eine Bremsung der Arbeitsmaschine (2) zu bewirken,
**dadurch gekennzeichnet, dass**
das Betätigungselement (3) auch in der Funktion des Bremssystems (1) als Hilfsbremse dazu eingerichtet ist, den Bremssattel (5) in einen Bremszustand zu überführen, wobei mindestens eine Steuereinrichtung (6), die dazu eingerichtet ist, fortwährend einen Betrieb des Bremssystems (1) zu überwachen und im Falle einer Unterfunktion des Bremssystems (1) in dessen Funktion als Betriebsbremse automatisch eine Umstellung auf die Funktion als Hilfsbremse zu erwirken.

2. Bremssystem (1) nach Anspruch 1, **gekennzeichnet durch** einen mit dem Betätigungselement (3) in Wirkverbindung stehenden Geberzylinder (4), der derart mit dem Bremssattel (5) in Wirkverbindung steht, dass der Bremssattel (5) über den Geberzylinder (4) hydraulisch in einen Bremszustand überführbar ist.

3. Bremssystem (1) nach einem der vorhergehenden Ansprüche, **gekennzeichnet durch** mindestens eine Sensoreinrichtung (7, 8) zur Erfassung von Betriebsdaten, wobei die Sensoreinrichtung (7, 8) in Daten übertragender Verbindung mit der Steuereinrichtung (6) steht, sodass die erfassten Betriebsdaten an die Steuereinrichtung (6) leitbar sind.

4. Bremssystem (1) nach Anspruch 3, **dadurch gekennzeichnet, dass** das Betätigungselement (3) als Bremspedal ausgebildet ist, wobei mindestens eine Sensoreinrichtung (7) als Winkelsensor zur Überwachung einer Winkelstellung des Betätigungselements (3) ausgebildet ist.

5. Bremssystem (1) nach Anspruch 2 in Verbindung mit einem der Ansprüche 3 oder 4, **dadurch gekennzeichnet, dass** mindestens eine Sensoreinrichtung (8) als Drucksensor ausgebildet ist, der mit einem Druckraum (9) des Geberzylinders (4) zusammenwirkt.

6. Bremssystem (1) nach einem der Ansprüche 2 bis 5, **dadurch gekennzeichnet, dass** der Bremssattel (5) einen Betriebskolben (10) und einen mit dem Betriebskolben (10) zusammenwirkenden hydraulischen Betriebsraum (11) umfasst, wobei ein in dem Betriebsraum (11) befindliches Fluid zumindest im Betrieb des Bremssystems (1) in dessen Funktion als Betriebsbremse bei Betätigung des Betätigungselements (3) über den Geberzylinder (4) mit einem hydraulischen Druck beaufschlagbar und auf diese Weise der Bremssattel (5) in einen Bremszustand überführbar sind.

7. Bremssystem (1) nach einem der vorhergehenden Ansprüche, **dadurch gekennzeichnet, dass** der Bremssattel (5) einen Hilfskolben (12), eine vorgespannte Feder (13) sowie einen hydraulischen Hilfsraum (14) umfasst, wobei der Hilfskolben (12) mittels der Feder (13) mit einer Federkraft beaufschlagt ist, die eine Überführung des Bremssattels (5) in einen Bremszustand anstrebt, und wobei eine Wirkfläche (15) des Hilfskolbens (12) derart an dem Hilfsraum (14) ausgebildet ist, dass eine hydraulische Druckkraft, die sich als Resultierende infolge eines an der Wirkfläche (15) anliegenden hydraulischen Drucks eines innerhalb des Hilfsraums (14) befindlichen Fluids einstellt, entgegen der Federkraft wirkt.

8. Bremssystem (1) nach Anspruch 7, **gekennzeichnet durch** mindestens eine Proportionalventil (16), das hydraulisch mit dem Hilfsraum (14) zusammenwirkt, wobei der hydraulische Druck des innerhalb des Hilfsraums (14) befindlichen Fluids mittels des Proportionalventils (16), vorzugsweise stufenlos, veränderbar ist, vorzugsweise bis auf null absenkbar ist.

9. Bremssystem (1) nach Anspruch 9, **dadurch gekennzeichnet, dass** das Proportionalventil (16) zumindest im Betrieb des Bremssystems (1) in dessen Funktion als Hilfsbremse mittels der Steuereinrichtung (6) ansteuerbar ist.

10. Bremssystem (1) nach einem der vorhergehenden Ansprüche, **dadurch gekennzeichnet, dass** das Bremssystem (1) eine Funktion als Feststellbremse umfasst, wobei das Bremssystem (1) ein Feststellelement (17), vorzugsweise in Form eines Druckknopfs, umfasst, mittels dessen die Funktion des Bremssystems (1) als Feststellbremse wechselweise aktivierbar und deaktivierbar ist.

11. Bremssystem (1) nach Anspruch 10, **dadurch gekennzeichnet, dass** das Feststellelement (17) derart mit der Steuereinrichtung (6) zusammenwirkt, dass bei einer Aktvierung der Funktion des Bremssystems (1) als Feststellbremse der Bremssattel (5) in einen Bremszustand überführbar und zumindest bis zu einer Deaktivierung der Funktion als Feststellbremse in dem Bremszustand haltbar ist.

12. Verfahren zum Betrieb eines Bremssystems (1) nach einem der vorhergehenden Ansprüche, umfassend
- ein Betätigungselement (3) sowie
- mindestens einen Bremssattel (5),
wobei das Bremssystem (1) eine Funktion als Betriebsbremse sowie eine Funktion als zur Betriebsbremse redundante Hilfsbremse umfasst,
wobei das Betätigungselement (3) zumindest in der Funktion des Bremssystems (1) als Betriebsbremse dazu eingerichtet ist, den Bremssattel (5) in einen Bremszustand zu überführen und auf diese Weise eine Bremsung der Arbeitsmaschine (2) zu bewirken,
**dadurch gekennzeichnet, dass**
das Bremssystem (1) sowohl in seiner Funktion als Betriebsbremse als auch in seiner Funktion als Hilfsbremse mittels desselben Betätigungselements (3) betätigt wird.

13. Verfahren nach Anspruch 12, **dadurch gekennzeichnet, dass** das Bremssystem (1) einen mit dem Betätigungselement (3) in Wirkverbindung stehenden Geberzylinder (4) aufweist, der derart mit dem Bremssattel (5) in Wirkverbindung steht, dass der Bremssattel (5) über den Geberzylinder (4) hydraulisch in einen Bremszustand überführbar ist, wobei mittels mindestens einer Sensoreinrichtung (7) Betriebsdaten betreffend das Betätigungselement (3) und mittels einer weiteren Sensoreinrichtung (8) Betriebsdaten des Geberzylinders (4) erfasst und die Betriebsdaten jeweils an eine Steuereinrichtung (6) geleitet werden, mittels der die Betriebsdaten ausgewertet werden und auf diese Weise festgestellt wird, ob eine Unterfunktion des Bremssystems (1) in dessen Funktion als Betriebsbremse vorliegt.

14. Verfahren nach Anspruch 13, **dadurch gekennzeichnet, dass** bei Feststellung einer nicht ordnungsgemäßen Ausführung des Bremssystems (1) in dessen Funktion als Betriebsbremse die Funktion des Bremssystems (1) automatisch mittels der Steuereinrichtung auf "Hilfsbremse" geändert wird.

15. Verfahren nach Anspruch 14, **dadurch gekennzeichnet, dass** die Steuereinrichtung (6) bei Betrieb des Bremssystems (1) in dessen Funktion als Hilfsbremse ein Proportionalventil (16) ansteuert, mittels dessen ein hydraulischer Druck eines in einem Hilfsraum (14) des Bremssattels (5) befindlichen Fluids, vorzugsweise stufenlos, verändert wird.

16. Verfahren nach Anspruch 15, **dadurch gekennzeichnet, dass** das Bremssystem (1) eine Funktion als Feststellbremse aufweist, wobei bei Betrieb als Feststellbremse die Steuereinrichtung (6) das Proportionalventil (16) derart ansteuert, dass der hydraulische Druck des in dem Hilfsraum (14) befindlichen Fluids auf null abgesenkt wird.

## Claims

1. A brake system (1) for an agricultural working machine (2), comprising
- an actuating element (3), as well as
- at least one brake calliper (5),
wherein the brake system (1) comprises a function as a service brake as well as a function as an emergency brake which is redundant with respect to the service brake, wherein, at least when the brake system (1) functions as a service brake, the actuating element (3) is configured to transpose the brake calliper (5) into a braking state and in this manner to carry out braking of the working machine (2),
**characterized in that**
the actuating element (3) is also configured to transpose the brake calliper (5) into a braking state when the brake system (1) functions as an emergency brake, wherein at least one control device (6) is configured to constantly monitor an operation of the brake system (1) and, in the case in which the brake system (1) is not functioning correctly when it functions as a service brake, to automatically change over to function as an emergency brake.

2. The brake system (1) according to claim 1, **characterized by** a master cylinder (4) which is operatively connected to the actuating element (3), which is operatively connected to the brake calliper (5) in a manner such that the brake calliper (5) can be transposed hydraulically into a braking state via the master cylinder (4).

3. The brake system (1) according to one of the preceding claims, **characterized by** at least one sensor device (7, 8) for detecting operational data, wherein the sensor device (7, 8) is in data-transmitting communication with the control device (6), so that the detected operational data can be directed to the control device (6).

4. The brake system (1) according to claim 3, **characterized in that** the actuating element (3) is configured as a brake pedal, wherein at least one sensor device (7) is configured as an angle sensor for monitoring an angular position of the actuating element (3).

5. The brake system (1) according to claim 2 in combination with one of claims 3 or 4, **characterized in that** at least one sensor device (8) is configured as a pressure sensor which cooperates with a pressure chamber (9) of the master cylinder (4).

6. The brake system (1) according to one of claims 2 to 5, **characterized in that** the brake calliper (5) comprises a service piston (10) and a hydraulic service chamber (11) which cooperates with the service piston (10), wherein, at least when the brake system (1) operates in its function as a service brake, upon actuation of the actuating element (3), a fluid located in the service chamber (11) can be pressurised with a hydraulic pressure via the master cylinder (4) and in this manner, the brake calliper (5) can be transposed into a braking state.

7. The brake system (1) according to one of the preceding claims, **characterized in that** the brake calliper (5) comprises an emergency piston (12), a pre-loaded spring (13) as well as a hydraulic emergency chamber (14), wherein the emergency piston (12) can be loaded with a spring force by means of the spring (13), which urges the transposition of the brake calliper (5) into a braking state, and wherein an active face (15) of the emergency piston (12) at the emergency chamber (14) is configured in a manner such that a hydraulic compressive force, which is a resultant hydraulic pressure of a fluid located inside the emergency chamber (14) applied to the active face (15), acts against the spring force.

8. The brake system (1) according to claim 7, **characterized by** at least one proportional valve (16) which cooperates hydraulically with the emergency chamber (14), wherein the hydraulic pressure of the fluid located inside the emergency chamber (14) can be varied by means of the proportional valve (16), preferably in a continuously variable manner, and preferably can be dropped to zero.

9. The brake system (1) according to claim 9, **characterized in that,** at least when the brake system (1) functions as an emergency brake, the proportional valve (16) can be controlled by means of the control unit (6).

10. The brake system (1) according to one of the preceding claims, **characterized in that** the brake system (1) comprises a function as a parking brake, wherein the brake system (1) comprises a parking element (17), preferably in the form of a push button, by means of which the function of the brake system (1) as a parking brake can be alternately activated and deactivated.

11. The brake system (1) according to claim 10, **characterized in that** the parking element (17) cooperates with the control device (6) in a manner such that during an activation of the function of the brake system (1) as a parking brake, the brake calliper (5) can be transposed into a braking state and can be kept in the braking state at least until the function as a parking brake is deactivated.

12. A method for operating a brake system (1) according to one of the preceding claims, comprising:
- an actuating element (3), as well as
- at least one brake calliper (5),
wherein the brake system (1) comprises a function as a service brake as well as a function as an emergency brake which is redundant with respect to the service brake, wherein, at least when the brake system (1) functions as a service brake, the actuating element (3) is configured to transpose the brake calliper (5) into a braking state and in this manner to carry out braking of the working machine (2),
**characterized in that**
the brake system (1) is actuated by means of the same actuating element (3) in both its function as a service brake and also in its function as an emergency brake.

13. The method according to claim 12, **characterized in that** the brake system (1) has a master cylinder (4) which is operatively connected to the actuating element (3), which is operatively connected to the brake calliper (5) in a manner such that the brake calliper (5) can be transposed hydraulically into a braking state via the master cylinder (4), wherein operational data relating to the actuating element (3) is detected by means of at least one sensor device (7) and operational data from the master cylinder (4) is detected by means of a further sensor device (8) and the respective operational data are directed to a control device (6) by means of which the operational data are evaluated and in this manner, it is determined whether the brake system (1) is functioning incorrectly when it functions as a service brake.

14. The method according to claim 13, **characterized in that** in the case in which the brake system (1), when it functions as a service brake, is determined not to be functioning correctly, the function of the brake system (1) is automatically changed to "emergency brake" by means of the control unit.

15. The method according to claim 14, **characterized in that** in the case in which the brake system (1) functions as an emergency brake, the control device (6) controls a proportional valve (16), by means of which a hydraulic pressure of a fluid located in an emergency chamber (14) of the brake calliper (5) is varied, preferably in a continuously variable manner.

16. The method according to claim 15, **characterized in that** the brake system (1) has a function as a parking brake, wherein, in the case in which it operates as a parking brake, the control device (6) controls the proportional valve (16) in a manner such that the hydraulic pressure of the fluid located in the emergency chamber (14) is dropped to zero.

## Revendications

1. Système de freinage (1) pour une machine de travail (2) agricole, comprenant
- un élément d'actionnement (3), ainsi que
- au moins un étrier de frein (5),
dans lequel le système de freinage (1) comporte une fonction comme frein de service ainsi qu'une fonction comme frein auxiliaire redondant pour le frein de service, dans lequel l'élément d'actionnement (3) est conçu au moins dans la fonction du système de freinage (1) comme frein de service afin de transférer l'étrier de frein (5) dans un état de freinage et de cette manière de provoquer un freinage de la machine de travail (2),
**caractérisé en ce que**
l'élément d'actionnement (3) est aussi conçu dans la fonction du système de freinage (1) comme frein auxiliaire afin de transférer l'étrier de frein (5) dans un état de freinage, dans lequel au moins un dispositif de commande (6) qui est conçu afin de surveiller en continu un fonctionnement du système de freinage (1) et dans le cas d'une sous-fonction du système de freinage (1) dans sa fonction comme frein de service d'obtenir automatiquement un passage à la fonction comme frein auxiliaire.

2. Système de freinage (1) selon la revendication 1, **caractérisé par** un cylindre émetteur (4) se trouvant en liaison active avec l'élément d'actionnement (3), qui est en liaison active avec l'étrier de frein (5) de telle manière que l'étrier de freinage (5) puisse être transféré par le biais du cylindre émetteur (4) hydrauliquement dans un état de freinage.

3. Système de freinage (1) selon l'une des revendications précédentes, **caractérisé par** au moins un dispositif capteur (7, 8) pour la détection de données de fonctionnement, dans lequel le dispositif capteur (7, 8) est en liaison de transmission de données avec le dispositif de commande (6) de sorte que les données de fonctionnement détectées puissent être acheminées au dispositif de commande (6).

4. Système de freinage (1) selon la revendication 3, **caractérisé en ce que** l'élément d'actionnement (3) est réalisé comme pédale de freinage, dans lequel au moins un dispositif capteur (7) est réalisé comme capteur d'angle pour la surveillance d'une position angulaire de l'élément d'actionnement (3).

5. Système de freinage (1) selon la revendication 2 en liaison avec l'une des revendications 3 ou 4, **caractérisé en ce qu'**au moins un dispositif capteur (8) est réalisé comme capteur de pression qui coagit avec un espace de pression (9) du cylindre émetteur (4).

6. Système de freinage (1) selon l'une des revendications 2 à 5, **caractérisé en ce que** l'étrier de frein (5) comporte un piston de fonctionnement (10) et un espace de fonctionnement (11) hydraulique coagissant avec le piston de fonctionnement (10), dans lequel un fluide se trouvant dans l'espace de fonctionnement (11) peut être alimenté en une pression hydraulique au moins en fonctionnement du système de freinage (1) dans sa fonction comme frein de service lors de l'actionnement de l'élément d'actionnement (3) par le biais du cylindre émetteur (4) et de cette manière l'étrier de frein (5) peut être transféré dans un état de freinage.

7. Système de freinage (1) selon l'une des revendications précédentes, **caractérisé en ce que** l'étrier de frein (5) comporte un piston auxiliaire (12), un ressort précontraint (13) ainsi qu'un espace auxiliaire (14) hydraulique, dans lequel le piston auxiliaire (12) est alimenté au moyen du ressort (13) en une force de ressort qui vise à une transition de l'étrier de frein (5) dans un état de freinage, et dans lequel une surface active (15) du piston auxiliaire (12) est réalisée sur l'espace auxiliaire (14) de telle manière qu'une force de pression hydraulique qui se règle comme résultante à la suite d'une pression hydraulique reposant contre la surface active (15) d'un fluide se trouvant à l'intérieur de l'espace auxiliaire (14), agisse contre la force de ressort.

8. Système de freinage (1) selon la revendication 7, **caractérisé par** au moins une soupape proportionnelle (16) qui coagit hydrauliquement avec l'espace auxiliaire (14), dans lequel la pression hydraulique du fluide se trouvant à l'intérieur de l'espace auxiliaire (14) est modifiable au moyen de la soupape proportionnelle (16), de préférence en continu, de préférence peut être abaissée à zéro.

9. Système de freinage (1) selon la revendication 9, **caractérisé en ce que** la soupape proportionnelle (16) est commandable au moins en fonctionnement du système de freinage (1) dans sa fonction comme frein auxiliaire au moyen du dispositif de commande (6).

10. Système de freinage (1) selon l'une des revendications précédentes, **caractérisé en ce que** le système de freinage (1) comporte une fonction comme frein de stationnement, dans lequel le système de freinage (1) comporte un élément de stationnement (17), de préférence sous la forme d'un bouton pression, au moyen duquel la fonction du système de freinage (1) peut être activée et désactivée alternativement comme frein de stationnement.

11. Système de freinage (1) selon la revendication 10, **caractérisé en ce que** l'élément de stationnement (17) coagit avec le dispositif de commande (6) de telle manière que pour une activation de la fonction du système de freinage (1) comme frein de stationnement, l'étrier de frein (5) puisse être transféré dans un état de freinage et puisse être maintenu au moins jusqu'à une désactivation de la fonction comme frein de stationnement dans l'état de freinage.

12. Procédé de fonctionnement d'un système de freinage (1) selon l'une des revendications précédentes, comprenant
- un élément d'actionnement (3) ainsi que
- au moins un étrier de frein (5),
dans lequel le système de freinage (1) comporte une fonction comme frein de service ainsi qu'une fonction comme frein auxiliaire redondant pour le frein de service, dans lequel l'élément d'actionnement (3) est conçu au moins dans la fonction du système de freinage (1) comme frein de service afin de transférer l'étrier de freinage (5) dans un état de freinage et de provoquer de cette manière un freinage de la machine de travail (2),
**caractérisé en ce que**
le système de freinage (1) est actionné non seulement dans sa fonction comme frein de service mais aussi dans sa fonction comme frein auxiliaire au moyen du même élément d'actionnement (3).

13. Procédé selon la revendication 12, **caractérisé en ce que** le système de freinage (1) présente un cylindre émetteur (4) se trouvant en liaison active avec l'élément d'actionnement (3), qui est en liaison active avec l'étrier de frein (5) de telle manière que l'étrier de frein (5) puisse être transféré par le biais du cylindre émetteur (4) hydrauliquement dans un état de freinage, dans lequel au moyen d'au moins un dispositif capteur (7), des données de fonctionnement concernant l'élément d'actionnement (3) et au moyen d'un autre dispositif capteur (8), des données de fonctionnement du cylindre émetteur (4) sont détectées et les données de fonctionnement sont acheminées respectivement à un dispositif de commande (6), au moyen duquel les données de fonctionnement sont évaluées et il est constaté de cette manière si une sous-fonction du système de freinage (1) se présente dans sa fonction comme frein de service.

14. Procédé selon la revendication 13, **caractérisé en ce que** lors de la constatation d'une réalisation non conforme du système de freinage (1) dans sa fonction comme frein de service, la fonction du système de freinage (1) est automatiquement modifiée au moyen du dispositif de commande en « frein auxiliaire ».

15. Procédé selon la revendication 14, **caractérisé en ce que** le dispositif de commande (6) commande lors du fonctionnement du système de freinage (1) dans sa fonction comme frein auxiliaire une soupape proportionnelle (16), au moyen de laquelle une pression hydraulique d'un fluide se trouvant dans un espace auxiliaire (14) de l'étrier de frein (5), est modifiée de préférence en continu.

16. Procédé selon la revendication 15, **caractérisé en ce que** le système de freinage (1) présente une fonction comme frein de stationnement, dans lequel lors du fonctionnement comme frein de stationnement, le dispositif de commande (6) commande la soupape proportionnelle (16) de telle manière que la pression hydraulique du fluide se trouvant dans l'espace auxiliaire (14) soit abaissée à zéro.
